# EUROPÄISCHE PATENTSCHRIFT

(11) **EP 2 197 703 B1**
(45) Veröffentlichungstag und Bekanntmachung des Hinweises auf die Patenterteilung: **31.08.2011**
(21) Anmeldenummer: 08803626.4
(22) Anmeldetag: 04.09.2008
(51) Int. Cl.: B60N 2/28

(54) **KINDERSCHUTZSYSTEM FÜR EINEN KRAFTFAHRZEUGSITZ**
CHILD PROTECTION SYSTEM FOR A MOTOR VEHICLE SEAT
SYSTÈME DE PROTECTION POUR ENFANT DESTINÉ À UN SIÈGE D'AUTOMOBILE

(30) Priorität: 11.09.2007 DE 102007043020
(43) Veröffentlichungstag der Anmeldung: 23.06.2010
(73) Patentinhaber: Takata-Petri AG, 63743 Aschaffenburg (DE)
(72) Erfinder: PORRMANN, Volker, 63739 Aschaffenburg (DE); BOLL, Rüdiger, 63856 Bessenbach (DE); NETT, Rainer, 63739 Aschaffenburg (DE)
(74) Vertreter: Schröder, Christoph
(86) Internationale Anmeldenummer: PCT/EP2008/061656
(87) Internationale Veröffentlichungsnummer: WO 2009/033996

(56) Entgegenhaltungen:
- EP-A- 1 006 017
- EP-A- 1 813 469
- US-B1- 6 491 348

## Beschreibung

Die Erfindung betrifft ein Kinderschutzsystem nach dem Oberbegriff des Anspruchs 1.

Ein derartiges, z. B. als Kindersitz bezeichnetes Kinderschutzsystem umfasst eine Sitzschale, eine entlang einer Lehnenlängsrichtung erstreckte Rückenlehne zum rückseitigen Abstützen des Torsos eines Kindes, ein oberes Rückenlehnenteil der Rückenlehne, das verschiebbar an der Sitzschale angeordnet ist, und einen Sicherheitsgurt, der über mindestens einen Gurtpunkt am oberen Rückenlehnenteil angeordnet ist.

Bei dem Sicherheitsgurt kann es sich insbesondere um ein Drei-Punkt- oder ein Fünf-Punkt-Gurtsystem handeln, bei dem der Sicherheitsgurt entweder an drei Punkten oder an fünf Punkten an einer tragenden Struktur des Kinderschutzsystems und/oder der Fahrzeugumgebung definiert positioniert ist. Derartige Sicherheitsgurte sind einstellbar, z. B. hinsichtlich der Position einzelner Gurtpunkte am Kinderschutzsystem, um den Sicherheitsgurt an die anthropometrischen Gegebenheiten eines kindlichen Körpers anpassen und so bestmöglichen Komfort und bestmögliche Sicherheit für ein Kind im Kinderschutzsystem gewährleisten zu können.

Häufig besteht jedoch Unsicherheit, welches die unter den jeweiligen Umständen, also z.B. in Abhängigkeit von Alter, Gewicht und Größe des Kindes, optimale Einstellung des Sicherheitsgurtes ist. Zudem kann die Verstellung der einzelnen Gurtpunkte, über die der Sicherheitsgurt definiert bezüglich einer tragenden Struktur des Kinderschutzsystems positioniert wird, Schwierigkeiten bereiten.

Um eine optimale, komfortable Position für ein Kind in der Sitzschale des Kinderschutzsystems zu erhalten, reicht es jedoch nicht aus, durch Verstellung der Position der Gurtpunke die Konfiguration des Sicherheitsgurtes zu ändern. In Abhängigkeit von Alter, Gewicht und Größe ist es vielmehr vorteilhaft, die Sitzposition des Kindes in der Sitzschale selbst anzupassen. Beispielsweise ist es für Neugeborene von Vorteil, in einer relativ flachen Lage transportiert zu werden, während ältere Kleinkinder in einer vergleichsweise steilen Position in der Sitzschale sitzen sollten.

Um die Sitzposition für ein Kind anzupassen, werden herkömmliche Kinderschutzsysteme beispielsweise mit zusätzlichen Polsterkissen ausgeliefert, die zur Anpassung der Sitzposition in die Sitzschale eingelegt werden können und der Abstützung des Kindes dienen. Nachteil ist hierbei, dass ein Benutzer des Kinderschutzsystems häufig nicht über die korrekte Handhabung und vorteilhafte Platzierung der Polsterkissen Bescheid weiß, so dass die Polsterkissen entweder gar nicht oder in nicht optimaler Weise eingesetzt werden. Andere Kinderschutzsysteme ermöglichen zwar eine Anpassung der Kontur der Sitzschale insbesondere zur Einstellung einer optimalen Sitzposition für Neugeborene. Diese Anpassung muss in der Regel aber separat von der Einstellung des Sicherheitsgurtes vorgenommen werden, was zu Unsicherheit über die optimale, in Abhängigkeit von Alter, Gewicht und Größe vorzunehmende Einstellung führen kann.

Aus der EP 1 813 469 A1 ist ein Kinderschutzsystem bekannt, bei dem die Höhe einer Sitzfläche in einer Sitzschale zusammen mit einer Kopfstütze eingestellt werden kann. Der Mechanismus zur Kopplung der Kopfstützenverstellung mit der Sitzfläche ist hierbei jedoch vergleichsweise kompliziert und erfordert eine große Anzahl an zusätzlichen Bauteilen.

Der Erfindung liegt die Aufgabe zugrunde, ein Kinderschutzsystem der eingangs genannten Art zu schaffen, das auf baulich einfache und zuverlässige Weise die Einstellung einer komfortablen und sicheren Sitzposition für ein Kind ermöglicht und zugleich eine einfache, bedienerfreundliche Einstellbarkeit des Kinderschutzsystems inklusive seines Sicherheitsgurtes gewährleistet.

Diese Aufgabe wird erfindungsgemäß durch ein Kinderschutzsystem mit den Merkmalen des Anspruchs 1 gelöst.

Danach umfasst das Kinderschutzsystem ein um eine Schwenkachse schwenkbar an der Sitzschale angeordnetes unteres Rückenlehnenteil der Rückenlehne, das einen feststehend am unteren Rückenlehnenteil angeordneten Kopplungsabschnitt aufweist, der ausgebildet und vorgesehen ist, derart mit dem oberen Rückenlehnenteil zusammenzuwirken, dass durch ein Verschieben des oberen Rückenlehnenteils die Neigung des unteren Rückenlehnenteils zusammen mit der Position des mindestens einen Gurtpunkts einstellbar ist, wobei das obere Rückenlehnenteil zum Verschwenken des unteren Rückenlehnenteils mit dem feststehend am unteren Rückenlehnenteil angeordneten kopplungsabschnitt in direkte Wirkverbindung tritt.

Die Erfindung geht von dem Gedanken aus die Einstellung des Gurtpunktes an der Rückenlehne mit der Einstellung der Kontur der Sitzschale zur Anpassung der Sitzposition zu koppeln. Hierzu ist insbesondere vorgesehen, dass bei Veränderung der Lage des Gurtpunktes durch Verschieben des oberen Rückenlehnenteils, an dem mindestens ein Gurtpunkt angeordnet ist, gleichzeitig auch das untere Rückenlehnenteil verschwenkt wirkt und somit die Geometrie der Sitzschale angepasst wird. Das obere Rückenlehnenteil ist dabei über den Kopplungsabschnitt mit dem unteren Rückenlehnenteil gekoppelt und wirkt auf das untere Rückenlehnenteil zum Verschwenken ein.

Das obere Rückenlehnenteil ist insbesondere zur Abstützung des Kopfes und oberen Torsos eines Kindes ausgebildet, während das untere Rückenlehnenteil zur Abstützung des Beckenbereichs eines Kindes dient. Durch Verschieben des oberen Rückenlehnenteils kann dann die Lage der Abstützung für den Kopf und den Oberkörper, insbesondere die Schultern eines Kindes angepasst werden, während gleichzeitig das untere Rückenlehnenteil verschwenkt wird, um den Beckenbereich in gewünschter Weise abzustützen. Bei einem Neugeborenen kann auf diese Weise durch Verschwenken des unteren Rückenlehnenteils in eine zum oberen Rückenlehnenteil geneigte Position eine flache Liegeposition des Kindes in der Sitzschale erreicht werden, während bei einem älteren und größeren Kleinkind durch Verschieben des oberen Rückenlehnenteils in eine in Lehnenlängsrichtung obere Position an der Sitzschale und ein Verschwenken des unteren Rückenlehnenteils in eine Position, in der das untere und das obere Rückenlehnenteil im Wesentlichen eine Ebene bilden, eine steilere Sitzposition eingestellt werden kann. Das obere Rückenlehnenteil ist hierzu entlang der Lehnenlängsrichtung verschiebbar, während die Schwenkachse, um die das untere Rückenlehnenteil rotatorisch verschwenkt wird, sich quer zur Lehnenlängsrichtung und Sitzschale erstreckt.

Der Kopplungsabschnitt ist bevorzugt ortsfest und drehfest an dem unteren Rückenlehnenteil angeordnet und somit feststehend zum unteren Rückenlehnenteil. Der Kopplungsabschnitt kann beispielsweise durch eine vom unteren Rückenlehnenteil abstehende Auswölbung ausgebildet sein, mit der das obere Rückenlehnenteil zum Verschwenken des unteren Rückenlehnenteils in direkte Wirkverbindung tritt. Dabei kann durch die Formgebung des feststehend am unteren Rückenlehnenteil angeordneten Kopplungsabschnitts die Verschwenkbewegung des unteren Rückenlehnenteils vorgegeben sein. In einer konkreten Ausgestaltung kann der Kopplungsabschnitt beispielsweise in seiner Kontur keilförmig ausgebildet sein, vom unteren Rückenlehnenteil abstehen und eine schräge Ebene aufweisen, die derart geneigt ist, dass bei einem Verschieben des oberen Rückenlehnenteils das obere Rückenlehnenteil zumindest mit einem Abschnitt entlang des Kopplungsabschnitts gleitet. Durch die Gleitbewegung des oberen Rückenlehnenteils entlang der schrägen, relativ zur eigentlichen, abstützenden Oberfläche des unteren Rückenlehnenteils geneigten Ebene übt das obere Rückenlehnenteil dann eine Verstellkraft auf das untere Rückenlehnenteil aus, die ein Verschwenken des unteren Rückenlehnenteils um die Schwenkachse bewirkt.

Mit der erfindungsgemäßen Lösung kann die so genannten Gurthöhe, also z. B. die Höhe zweier Gurtpunkte an der Rückenlehne entlang der Lehnenlängsrichtung, zusammen mit der Kontur der Rückenlehne des Kinderschutzsystems eingestellt werden, wobei die beiden Gurtpunkte insbesondere quer zur Lehnenlängsrichtung nebeneinander angeordnet sind und jeweils einen Umlenkpunkt für den Sicherheitsgurt des Gurtsystems bilden. Bei den Umlenkpunkten kann es sich um Schlitze handeln, durch die jeweils ein Gurtabschnitt des Sicherheitsgurtes geführt ist. Die erfindungsgemäße Lösung ermöglicht bei geeigneter Ausgestaltung eines Griffbereiches des verstellbaren oberen Rückenlehnenteils eine einhändige Einstellung mehrerer Gurtpunkte zusammen mit der Anpassung der Kontur der Rückenlehne, da durch Verschieben des oberen Rückenlehnenteils sowohl die Position des an dem oberen Rückenlehnenteil angeordneten mindestens einen Gurtpunkts als auch die Neigung des unteren Rückenlehnenteils neu eingestellt werden kann, indem eine einzelne Baugruppe des Kinderschutzsystems verstellt wird.

Dem verstellbaren oberen Rückenlehnenteil des Kinderschutzsystems ist ein Verriegelungsmechanismus zugeordnet, um das obere Rückenlehnenteil in einer zuvor eingestellten Position arretieren zu können. Der Verriegelungsmechanismus weist hierzu z. B. Formschlusselemente auf, die einerseits an dem oberen Rückenlehnenteil und andererseits an einer nicht gemeinsam mit dem oberen Rückenlehnenteil bewegbaren Komponente des Kinderschutzsystems vorgesehen sind und die zur Verriegelung des oberen Rückenlehnenteils in einer zuvor eingestellten Position formschlüssig ineinander greifen können, insbesondere Formschlusselemente in Form von Rastelementen.

Gemäß einer konkreten Ausführungsform ist eine Rastschiene mit in Verstellrichtung hintereinander angeordneten Raststellen, z.B. in Form von Rastöffnungen vorgesehen, wobei die einzelnen Rastöffnungen unterschiedliche Einstellpositionen des oberen Rückenlehnenteils definieren und den Rastöffnungen ein Rastvorsprung zugeordnet ist, der - in Abhängigkeit von der Einstellposition des oberen Rückenlehnenteils - in eine der Rastöffnungen eingreift. Dabei ist der Rastvorsprung bevorzugt elastisch in Richtung auf einen verriegelten Zustand vorgespannt.

Alternativ kann auch eine Mehrzahl Rastvorsprünge an der Rastschiene vorgesehen sein, wobei die einzelnen Rastvorsprünge jeweils eine Einstellposition des oberen Rückenlehnenteils definieren und der Mehrzahl Rastvorsprünge eine Rastöffnung zugeordnet ist, die in Abhängigkeit von der Einstellposition des oberen Rückenlehnenteils mit einem der Rastvorsprünge in Eingriff bringbar ist.

Dem oberen Rückenlehnenteil des Kinderschutzsystems ist bevorzugt eine Anzeigeeinrichtung zugeordnet, anhand derer die jeweils eingestellte Position des oberen Rückenlehnenteils des Kinderschutzsystems ablesbar ist. Hierbei kann es sich beispielsweise um eine an dem oberen Rückenlehnenteil angeordnete Skala handeln, die durch ein Anzeigefenster hindurch sichtbar ist.

Der der Erfindung zugrunde liegende Gedanke soll nachfolgend anhand der in den Figuren dargestellten Ausführungsbeispiele näher erläutert werden. Es zeigen:
- Fig.1: eine schematische, perspektivische Vorderansicht eines Kinderschutzsystems in Form eines Kindersitzes mit integriertem Gurtsystem, verschiebbarem oberen Rückenlehnenteil und verschwenkbarem unteren Rückenlehnenteil;
- Fig. 2: eine schematische, perspektivische Rückansicht des Kinderschutzsystems gemäß Fig. 1;
- Fig. 3: eine schematische Querschnittansicht durch ein Kinderschutzsystems in Form eines Kindersitzes mit verschiebbarem oberen Rückenlehnenteil und verschwenkbarem unteren Rückenlehnenteil;
- Fig.4: eine schematische Querschnittansicht durch das Kinderschutzsystem gemäß Fig. 3 in einer Position für ein neugeborenes Kind und
- Fig. 5: eine schematische Querschnittansicht durch das Kinderschutzsystem gemäß Fig. 3 in einer Position für ein älteres Kleinkind.

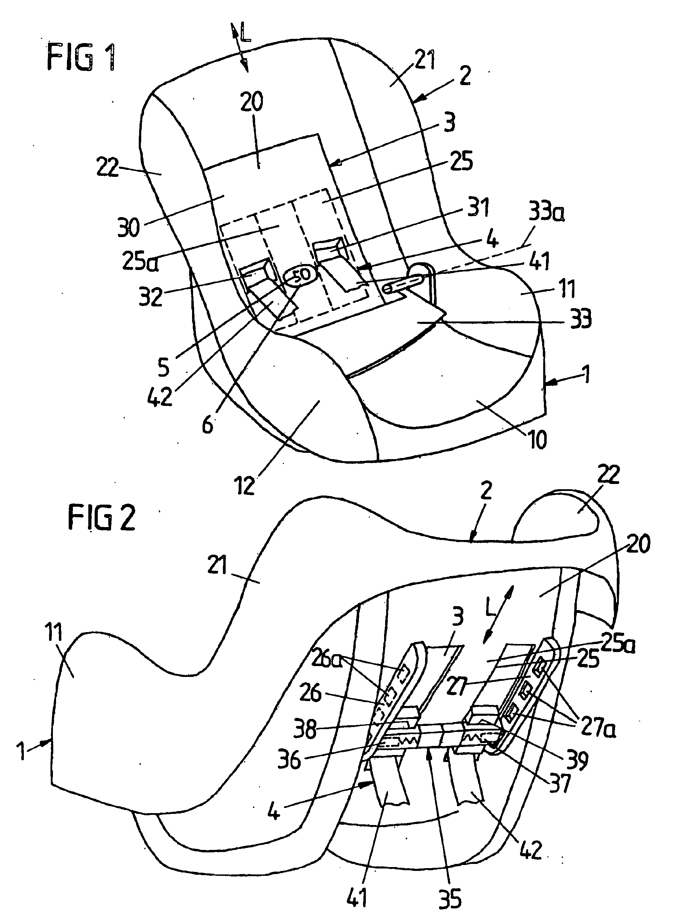

In Fig. 1 und 2 sind perspektivisch Ausführungsformen eines Kindersitzes für ein Kraftfahrzeug, also zur Anordnung auf einem Kraftfahrzeugsitz, dargestellt, der eine von einer Sitzschale 1 abstehende, entlang einer Lehnenlängsrichtung L erstreckte Rückenlehne 2 sowie ein Gurtsystem aufweist. Die Rückenlehne 2 dient zum Abstützen des Rückens eines Kindes, welches auf der Sitzschale 1 des Kindersitzes Platz nimmt, wobei sich die Wirbelsäule des Kindes dann im Wesentlichen -entlang der Lehnenlängsrichtung L erstreckt. Sowohl die eine Sitzfläche 10 bildende Sitzschale 1 als auch die eine Rückenstütze 20 bildende Rückenlehne 2 weisen jeweils seitliche Sitzwangen 11, 12; 21, 22 zur (mittigen) Stabilisierung einer bestimmungsgemäßen Sitzposition eines Kindes auf.

In die Rückenlehne 2 des Kindersitzes 1 ist eine bewegliche Baugruppe in Form eines einstellbaren Rückenlehnenteiles 3 integriert, welches mit einem oberen Rückenlehnenteil 30 und einem unteren Rückenlehnenteil 33 einen Bestandteil der Rückenstütze 20 der Rückenlehne 2 bildet. Dieses Rückenlehnenteil 3 weist an seinem oberen Rückenlehnenteil 30 zwei Gurtpunkte 31, 32 in Form von Umlenkstellen auf, an denen jeweils ein Gurtabschnitt 41, 42, nämlich einem Schultergurtabschnitt, eines Sicherheitsgurtes 4 des Kinderschutzsystems geführt und umgelenkt ist. Die Gurtpunkte 31, 32 in Form von Umlenkstellen in dem oberen Rückenlehnenteil 30 sind vorliegend jeweils als Schlitze ausgeführt, die von den umzulenkenden Schultergurtabschnitten 41, 42 des Sicherheitsgurtes 4 durchgriffen werden (siehe Fig. 1 und 2). Hierdurch ist der Sicherheitsgurt 4 an diesen zwei quer zur Lehnenlängsrichtung L voneinander beabstandeten Gurtpunkten 41, 42 (Umlenkstellen) jeweils in eindeutiger Weise an einer tragenden Struktur des Kinderschutzsystems, nämlich am oberen Rückenlehnenteil 30 der Rückenlehne 2, positioniert.

Der Sicherheitsgurt 4 kann Bestanteil eines Drei-Punkt- oder Fünf-Punkt-Gurtsystems sein, wobei bei einem Drei-Punkt-Gurtsystem ein dritter Gurtabschnitt an einem im vorderen Bereich der Sitzschale angeordneten Gurtpunkt geführt ist und bei einem Fünf-Punkt-Gurtsystem zusätzlich ein vierter und fünfter Gurtabschnitt an Gurtpunkten an den seitlichen Lehnenwangen 11, 12 der Sitzfläche 10 angeordnet ist.

Wie in Fig. 1 und 2 ersichtlich, ist das Rückenlehnenteil 3 zweiteilig mit einem oberen Rückenlehnenteil 30 und einem unteren Rückenlehnenteil 33 ausgeführt. Das obere Rückenlehnenteil 30 ist dabei in Lehnenlängsrichtung L verschieblich an der Rückenlehne 2 angeordnet, während das untere Rückenlehnenteil 33 um eine durch ein Drehgelenk ausgebildete Schwenkachse 33a rotatorisch verschwenkbar an der Rückenlehne 2 gelagert ist. Durch das zweigeteilte, die Rückenstütze 20 der Rückenlehne 2 ausbildende Rückenlehnenteil 3 kann die Kontur der Rückenstütze 20 variabel an ein im Kindersitz befindliches Kind angepasst und somit die Sitzposition in Abhängigkeit von Größe, Alter und Gewicht eines Kindes eingestellt werden.

Das obere Rückenlehnenteil 30 und das untere Rückenlehnenteil 33 sind derart miteinander gekoppelt, dass ein Verschieben des oberen Rückenlehnenteils 30 entlang der Lehnenlängsrichtung L automatisch ein Verschwenken des unteren Rückenlehnenteils 33 um die Schwenkachse 33a nach sich zieht.

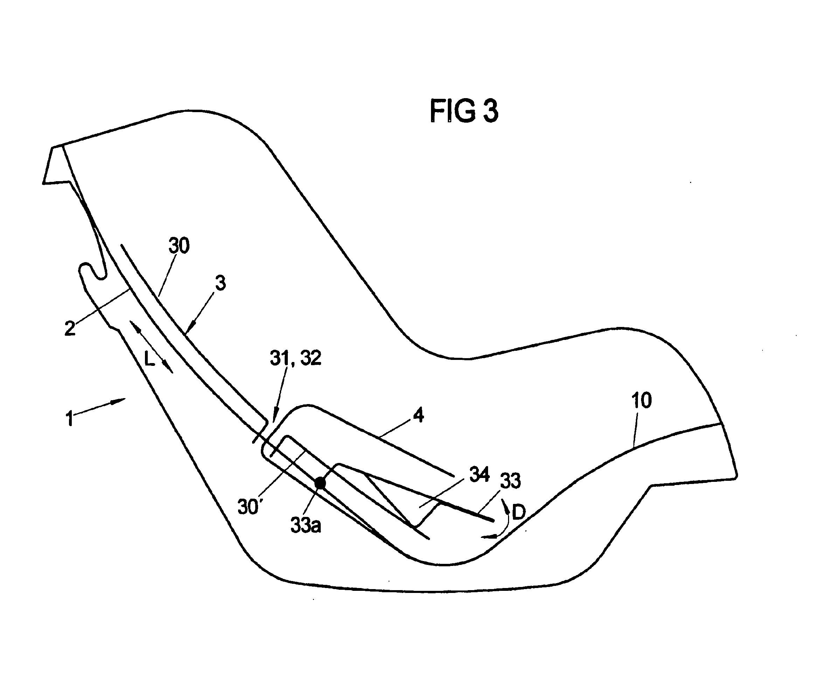

Ein Ausführungsbeispiel eines Kopplungsmechanismus zwischen dem oberen Rückenlehnenteil 30 und dem unteren Rückenlehnenteil 33a ist in den schematischen Querschnittansichten in Fig. 3 bis 5 veranschaulicht. Wie aus Fig. 3 bis 5 ersichtlich ist, ist am unteren Rückenlehnenteil 33 ein Kopplungsabschnitt 34 in Form einer Auswölbung ausgebildet, die sich abstehend von dem unteren Rückenlehnenteil 33 hin zur Sitzschale 1 erstreckt. Das untere Rückenlehnenteil 33 ist um die Schwenkachse 33a schwenkbar an der Sitzschale 1 gelagert und erstreckt sich lediglich im unteren Bereich der Rückenlehne 2, mit dem der Beckenbereich eines im Kindersitz befindlichen Kindes abgestützt wird. In Abhängigkeit von der Position des oberen Rückenlehnenteils 30 wirkt der Kopplungsabschnitt 34 mit einem unteren Abschnitt 30' des oberen Rückenlehnenteils 30 zusammen und stellt somit eine Kopplung zwischen dem oberen Rückenlehnenteil 30 und dem unteren Rückenlehnenteil 33 her.

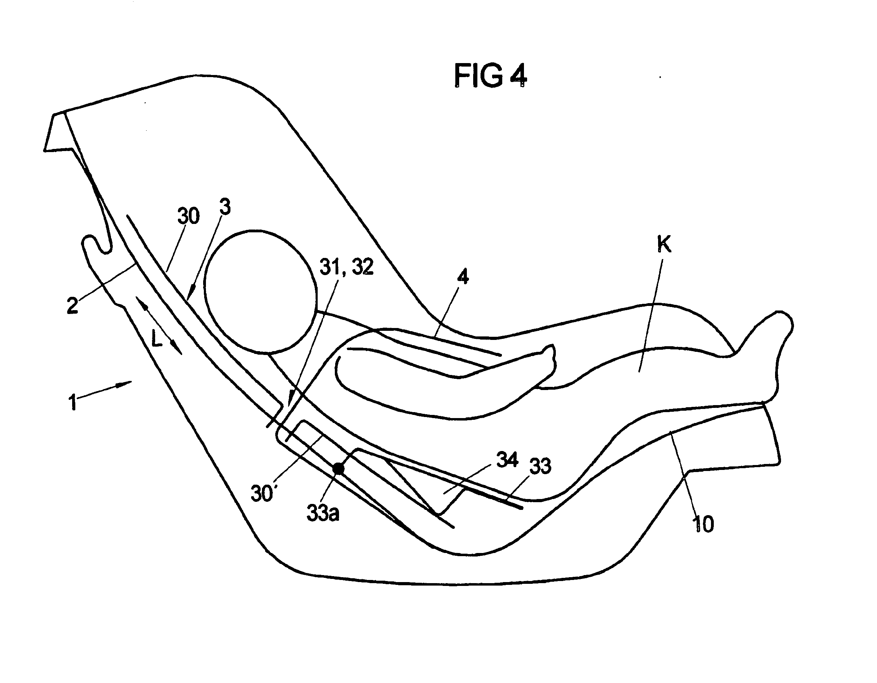

In Fig. 3 ist das obere Rückenlehnenteil 30 in einer unteren Position dargestellt, in der das obere Rückenlehnenteil 30 maximal in Richtung des unteren Rückenlehnenteils 33 verschoben ist. In dieser Position liegt der Kopplungsabschnitt 34 vollständig auf dem unteren Abschnitt 30' des oberen Rückenlehnenteils 30 auf, so dass das untere Rückenlehnenteil 33 gegenüber dem oberen Rückenlehnenteil 30 verschwenkt und geneigt ist. In dieser Stellung ist das untere Rückenlehnenteil 33 angehoben und bewirkt, wie in Fig. 4 veranschaulicht ist, eine flache, fast liegende Position eines Kindes K im Kindersitz, die insbesondere für ein neugeborenes Kind geeignet ist.

Bei einem Verschieben des oberen Rückenlehnenteils 30 aus der in Fig. 3 und 4 dargestellten unteren Position entlang der Lehnenlängsrichtung L nach oben gleitet der untere Abschnitt 30' des oberen Rückenlehnenteils 30 entlang des Kopplungsabschnitts 34, wobei das Ende des unteren Abschnitts 30' entlang des keilförmigen, eine schräge Ebene aufweisenden Kopplungsabschnitts 34 geführt wird und auf diese Weise das untere Rückenlehnenteil 33 hin zum Boden der Sitzschale 1 verschwenkt. Gegebenenfalls kann das untere Rückenlehnenteil 33 auch elastisch um die Schwenkachse 33a derart vorgespannt sein, dass es zu einem Verschwenken im Urzeigersinn in Fig. 3 bis 5 tendiert, also bei einem Verschieben des oberen Rückenlehnenteils 30 automatisch zur Rückenlehne 2 hin verschwenkt wird.

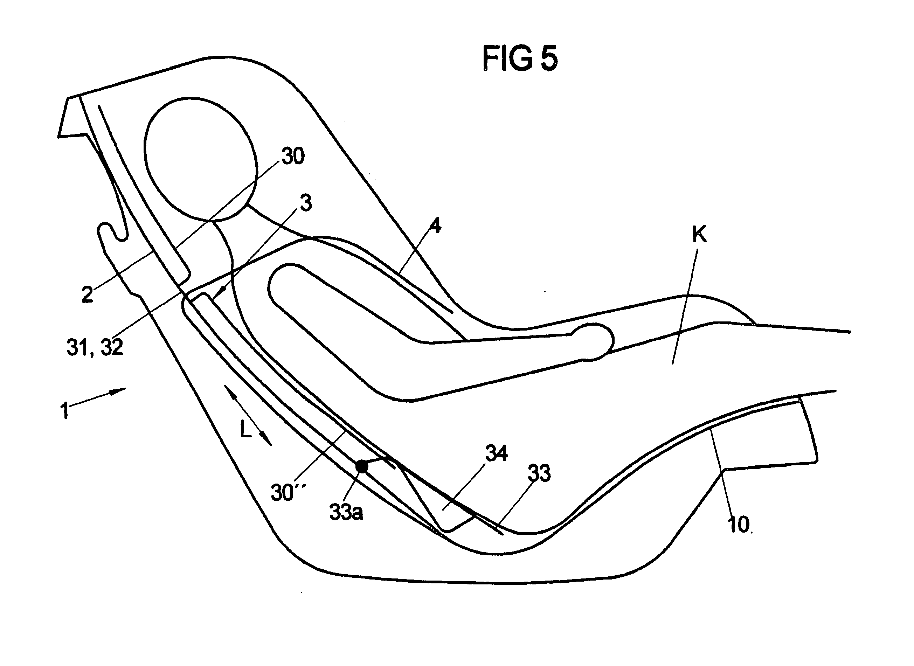

In Fig. 5 ist das obere Rückenlehnenteil 30 in einer maximal nach oben verschobenen Position dargestellt, die insbesondere für ein älteres Kleinkind geeignet ist. In dieser Position liegt der Kopplungsabschnitt 34 an einer Grundfläche der Sitzschale 1 an, so dass sich das untere Rückenlehnenteil 33 und das obere Rückenlehnenteil 30 im Wesentlichen in einer Ebene erstrecken. Auf diese Weise wird der Kindersitz für eine vergleichsweise steile, für ein älteres Kleinkind geeignete Sitzposition angepasst, wobei zusammen mit dem Verschieben des oberen Rückenlehnenteils 30 auch die Höhe der Gurtpunkte 31, 32 an der Rückenlehne 2 eingestellt wird, die Einstellung des Sicherheitsgurtes 4 also synchron und zwangsgekoppelt mit der Einstellung der Lehnenkontur erfolgt.

Der Kopplungsabschnitt 34 kann, wie in Fig. 3 bis 5 veranschaulicht, keilförmig mit einer schiefen Ebene ausgebildet sein. Durch seine Formgebung gibt der Kopplungsabschnitt 34 die Verschwenkbewegung des unteren Rückenlehnenteiles 33 in Abhängigkeit von der Verschiebeposition des oberen Rückenlehnenteils 30 vor. Gegebenenfalls kann der Kopplungsabschnitt 34 in seiner Kontur auch anders, beispielsweise halbrund oder sinusförmig, geformt sein, um somit im Zusammenwirken mit dem unteren Abschnitt 30' eine andersartige Verschwenkbewegung zu definieren.

Aufgrund der (translatorischen) Beweglichkeit des oberen Rückenlehnenteiles 30, welches hierzu vorteilhaft an einer entlang der Verstellbahn des oberen Rückenlehnenteils 30, also entlang der Lehnenlängsrichtung L, erstreckten Schiene 25a längsbeweglich geführt ist (siehe Fig. 2), lässt sich die Gurthöhe des Sicherheitsgurtes 4, also die Lage der die Schultergurtabschnitte 41, 42 führenden und positionierenden Umlenkstellen 31, 32 des Kinderschutzsystems entlang der Lehnenlängsrichtung L, einstellen, und zwar für beide Umlenkstellen 31, 32 gemeinsam (durch Verschiebung des oberen Rückenlehnenteiles 30). Zusammen mit der Einstellung der Gurthöhe wird gleichzeitig auch die Neigung des unteren Rückenlehnenteils 33 eingestellt, indem das obere Rückenlehnenteil 30 auf das untere Rückenlehnenteil 33 einwirkt und das untere Rückenlehnenteil verschwenkt. Das Verschwenken des unteren Rückenlehnenteils erfolgt automatisch beim Verschieben des oberen Rückenlehnenteils 30, so dass kein gesonderter Schritt zur Einstellung des unteren Rückenlehnenteils 33 erforderlich ist. Die vorliegende Erfindung ermöglicht somit ein gemeinsames Einstellen der Gurthöhe des Sicherheitsgurtes 4 und der Kontur der Rückenlehne 2 zur Anpassung der Sitzposition. Die die Höhe des Sicherheitsgurtes 4 an der Rückenlehne 2 vorgebenden Gurtpunkte 31, 32 sind dabei auf die Verschwenkposition des unteren Rückenlehnenteils 33 abgestimmt, so dass die Sitzposition und die Gurthöhe jeweils der gewünschten Einstellung für ein im Kindersitz befindliches Kind entsprechen.

Wie aus Fig. 2 ersichtlich ist, ist die als Führungsschiene dienende längserstreckte Schiene 25a in der Rückenlehne 2, genauer in der Rückenstütze 20 ausgebildet und überbrückt eine in der Rückenstütze 20 vorgesehene Ausnehmung 25 in Lehnenlängsrichtung L. Das verstellbare Rückenlehnenteil 3, welches mit seinem oberen Rückenlehnenteil 30 vor der vorderen, einem den Kindersitz nutzenden Kind zugewandten Oberfläche der Rückenlehne 2 bzw. Rückenstütze 20 angeordnet ist, umgreift die längserstreckte Führungsschiene 25a mit einem rückseitigen Führungsabschnitt 35 in Form einer Quertraverse, so dass das höhenverstellbare obere Rückenlehnenteil 30 an der in Lehnenlängsrichtung L erstreckten Führungsschiene 25a entlang jener Richtung L beweglich (verschieblich) geführt ist.

Wie ebenfalls in der Rückansicht der Fig. 2 dargestellt ist, ist auf der Rückseite des Kindersitzes, genauer der Rückseite der Rückenlehne 2, an dem Führungsabschnitt 35 des verstellbaren oberen Rückenlehnenteiles 30 eine Bedieneinrichtung vorgesehen, die Bedienmittel in Form eines oder mehrerer Bedienelemente 38, 39 aufweist, mittels derer ein Rastmechanismus entriegelbar ist, der zur Verriegelung des oberen Rückenlehnenteiles 30 in seiner jeweiligen Einstellposition entlang der Lehnenlängsrichtung L dient.

Der Rastmechanismus umfasst eine Mehrzahl von Raststellen 26a, 27a in Form von Rastöffnungen, die entlang der Verstellbahn des oberen Rückenlehnenteiles 30, also entlang der Lehnenlängsrichtung L, an je einer von zwei parallel zueinander entlang der Lehnenlängsrichtung L erstreckten und quer zu jener Richtung L voneinander beabstandeten Rastschienen 26, 27 hintereinander angeordnet sind. Dabei greift in jeder der möglichen Einstellpositionen des oberen Rückenlehnenteils 30 ein an der Rückseite des oberen Rückenlehnenteiles 30 vorgesehenes Rastelement 36, 37 in Form eines Rastvorsprunges in je eine der Rastöffnungen 26a, 27a der beiden Rastschienen 26, 27 ein. Der jeweilige Rastvorsprung 36, 37 ist elastisch in Richtung auf die jeweils zugeordnete Rastöffnung 26a, 27a vorgespannt, so dass das obere Rückenlehnenteil 30 tendenziell in einer jeweils eingestellten Rastposition sicher verriegelt ist.

Diese (formschlüssige) Verriegelung lässt sich durch Betätigung der hierfür vorgesehenen Bedienmittel 38, 39 aufheben, indem der jeweilige in eine der Rastöffnungen 26a, 27a eingreifende Rastvorsprung 36, 37 entgegen der (z. B. mittels eines Federelementes aufgebrachten) elastischen Vorspannung aus der jeweils zugeordneten Rastöffnung 26a, 27a ausgehoben wird. Sodann kann das obere Rückenlehnenteil 30 entlang der Lehnenlängsrichtung L verschoben und dadurch in seiner Position neu eingestellt werden, um die Gurthöhe zu verstellen und zugleich die Neigung des unteren Rückenlehnenteils 33 anzupassen. Anschließend wird das obere Rückenlehnenteil 30 in der aktuell eingestellten Position mittels des vorstehend beschriebenen Rastmechanismus wieder verriegelt. Bei geeigneter Auslegung des Rastmechanismus unter Zuordnung mehrerer Rastöffnungen einerseits und mehrerer Rastvorsprünge andererseits kann die Verstellung des oberen Rückenlehnenteils auch inkrementell vorgenommen werden.

Aufgrund der elastischen Vorspannung, unter der die Rastelemente 36, 37 in Richtung auf die Rastschienen 26, 27 und die dortigen Rastöffnungen 26a, 27a verspannt sind, ist bei einer Neueinstellung der Position des oberen Rückenlehnenteils 3 entlang der Lehnenlängsrichtung L eine permanente Betätigung der Bedienmittel 38, 39 (bestehend aus einem oder mehreren Bedienelementen) erforderlich. Sobald diese Betätigung aufgehoben wird, rasten die Rastelemente 36, 37 in der nächstkommenden Rastposition in die zugeordneten Rastöffnungen 26a, 27a ein.

Im Ergebnis ist die Position der beiden Gurtpunkte 31, 32 zusammen mit der Neigung des unteren Rückenlehnenteils 33 in nur einem Einstellvorgang verstellbar, indem die Position des verstellbaren oberen Rückenlehnenteils 30 entlang der Lehnenlängsrichtung L eingestellt wird. Diese Verstellung kann einhändig erfolgen, indem das obere Rückenlehnenteil 30 entlang der Lehnenlängsrichtung L bewegt wird, z. B. durch Ergreifen des dann als Handgriff dienenden Führungsabschnittes 35, welcher die längserstreckte Führungsschiene 25a hintergreift, und durch Bewegen jenes Führungsabschnittes 35 entlang der Führungsschiene 25a, wobei das obere Rückenlehnenteil 30 insgesamt mitgenommen und verschoben und dadurch auch das untere Rückenlehnenteil 33 verschwenkt wird. Dieser Vorgang wird weiter vereinfacht, wenn als Bedienmittel 38, 39 nur ein Bedienelement zum Entriegeln des Rastmechanismus vorgesehen ist.

Die aktuelle Einstellposition des oberen Rückenlehnenteiles 30 und somit der gesamten Rückenstütze 3 lässt sich an einer Anzeigevorrichtung ablesen, die durch ein am oberen Rückenlehnenteil 30 ausgebildetes Anzeigefenster 6 und eine an der Sitzschale unterhalb des oberen Rückenlehnenteils 30 angeordnete Skala 5 verwirklicht ist. Die Skala 5 kann beispielsweise feststehend an der Sitzschale 1 des Kindersitzes angeordnet sein, so dass sie nicht gemeinsam mit dem Rückenlehnenteil 3 (entlang der Lehnenlängsrichtung L) bewegbar ist, während das Anzeigefenster 6 am oberen Rückenlehnenteil 30 vorgesehen ist und somit bei einer Neueinstellung des oberen Rückenlehnenteils zur Einstellung der Gurthöhe und der Sitzposition gemeinsam mit dem oberen Rückenstütteil 30 entlang der Lehnenlängsrichtung L verschoben wird. Die Anzeigevorrichtung muss nicht die absolute Höhe des oberen Rückenlehnenteils 30 anzeigen, sondern kann beispielsweise auch zur Erleichterung der Einstellung und zur Bedienerfreundlichkeit die Größe oder das Alter des Kindes angeben.

### Bezugszeichenliste

- 1: Sitzschale
- 10: Sitzfläche
- 11, 12, 21, 22: Sitzwangen
- 2: Rückenlehne
- 20: Rückenstütze
- 25: Ausnehmung
- 25a: Schiene
- 26a, 27a: Raststellen
- 26, 27: Rastschienen
- 3: Rückenlehnenteil
- 30: Oberes Rückenlehnenteil
- 30': Unterer Abschnitt
- 31,32: Gurtpunkte
- 33: Unteres Rückenlehnenteil
- 33a: Schwenkachse
- 34: Kopplungsabschnitt
- 35: Führungsabschnitt
- 36, 37: Rastelemente
- 38, 39: Bedienelemente
- 4: Sicherheitsgurt
- 41, 42: Gurtabschnitt
- 5: Skale
- 6: Anzeigefenster
- D: Verschwenkbewegung
- K: Kind
- L: Lehnenlängsrichtung
- V: Verschiebebewegung

## Patentansprüche

1. Kinderschutzsystem für einen Kraftfahrzeugsitz, mit
- einer Sitzschale (1),
- einer entlang einer Lehnenlängsrichtung erstreckten Rückenlehne (2) der Sitzschale zum rückseitigen Abstützen des Torsos eines Kindes und
- einem Sicherheitsgurt (4),
wobei die Rückenlehne ein oberes Rückenlehnenteil (30) aufweist, das verschiebbar an der Sitzschale (1) angeordnet ist und an dem mindestens ein Gurtpunkt (31, 32) vorgesehen ist, an dem der Sicherheitsgurt (4) angeordnet ist, wobei ein um eine Schwenkachse (33a) schwenkbar an der Sitzschale (1) angeordnetes unteres Rückenlehnenteil (33) der Rückenlehne (2), das einen feststehend am unteren Rückenlehnenteil (33) angeordneten Kopplungsabschnitt (34) aufweist, der ausgebildet und vorgesehen ist, derart mit dem oberen Rückenlehnenteil (30) zusammenzuwirken, dass durch ein Verschieben des oberen Rückenlehnenteils (30) die Neigung des unteren Rückenlehnenteils (33) zusammen mit der Position des mindestens einen Gurtpunkts (31, 32) einstellbar ist,
**dadurch gekennzeichnet, dass**
das obere Rückenlehnenteil (30) zum Verschwenken des unteren Rückenlehnenteils (33) mit dem feststehend am unteren Rückenlehnenteil (33) angeordneten Kopplungsabschnitt (34) in direkte Wirkverbindung tritt.

2. Kinderschutzsystem nach Anspruch 1, **dadurch gekennzeichnet, dass** das obere Rückenlehnenteil (30) zur Abstützung des Kopfes und oberen Torsos eines Kindes (K) und das untere Rückenlehnenteil (33) zur Abstützung des Beckenbereichs eines Kindes (K) ausgebildet sind.

3. Kinderschutzsystem nach Anspruch 1 oder 2, **dadurch gekennzeichnet, dass** das obere Rückenlehnenteil (30) entlang der Lehnenlängsrichtung (L) verschiebbar ist, entlang der sich die Rückenlehne (2) erstreckt.

4. Kinderschutzsystem nach einem der Ansprüche 1 bis 3, **dadurch gekennzeichnet, dass** die Schwenkachse (33a) sich quer zur Lehnenlängsrichtung (L) erstreckt.

5. Kinderschutzsystem nach einem der vorangehenden Ansprüche, **dadurch gekennzeichnet, dass** der Kopplungsabschnitt (34) ortsfest und drehfest an dem unteren Rückenlehnenteil (33) angeordnet ist.

6. Kinderschutzsystem nach einem der vorangehenden Ansprüche, **dadurch gekennzeichnet, dass** durch die Formgebung des feststehend am unteren Rückenlehnenteil (30) angeordneten Kopptungsabschnitts (34) die Verschwenkbewegung (D) des unteren Rückenlehnenteils (33) vorgegeben ist.

7. Kinderschutzsystem nach Anspruch 6, **dadurch gekennzeichnet, dass** der Kopplungsabschnitt (34) keilförmig ausgebildet ist und eine schräge Ebene aufweist, die derart geneigt ist, dass bei einem Verschieben des oberen Rückenlehnenteils (30) das obere Rückenlehnenteil (30) zumindest mit einem Abschnitt (30') entlang des Kopplungsabschnitts (34) gleitet, um das untere Rückenlehnenteil (33) um die Schwenkachse (33a) zu verschwenken.

8. Kinderschutzsystem nach einem der vorangehenden Ansprüche, **dadurch gekennzeichnet, dass** am oberen Rückenlehnenteil (30) mindestens zwei als Umlenkstellen zur Umlenkung jeweils eines Gurtabschnittes des Sicherheitsgurtes (4) ausgebildete Gurtpunkte (31, 32) vorgesehen sind.

9. Kinderschutzsystem nach 8, **dadurch gekennzeichnet, dass** die Gurtpunkte (31, 32) durch Schlitze des oberen Rückenlehnenteils (30) gebildet sind.

10. Kinderschutzsystem nach einem der vorangehenden Ansprüche, **dadurch gekennzeichnet, dass** die an den Gurtpunkten (31, 32) positionierten Gurtabschnitte (41, 42) des mindestens einen Sicherheitsgurtes (4) Schultergurtabschnitte sind.

11. Kinderschutzsystem nach einem der vorangehenden Ansprüche, **dadurch gekennzeichnet, dass** das obere Rückenlehnenteil (30) an einer Schiene (25a) entlang der Lehnenlängsrichtung (L) beweglich geführt ist.

12. Kinderschutzsystem nach einem der vorangehenden Ansprüche, **dadurch gekennzeichnet, dass** das obere Rückenfehnenteil (30) in seiner jeweils eingestellten Position mittels eines Verriegelungsmechanismus (26, 27; 36, 37) verriegelbar ist.

13. Kinderschutzsystem nach Anspruch 12, **dadurch gekennzeichnet, dass** der Verriegelungsmechanismus (26, 27; 36, 37) einen Rastmechanismus umfasst und elastisch in den verriegelten Zustand vorgespannt ist.

14. Kinderschutzsystem nach einem der vorangehenden Ansprüche, **dadurch gekennzeichnet, dass** eine Anzeigeeinrichtung (5, 6) vorgesehen ist, mittels der die eingestellte Position der Gurtpunkte (31, 32) ablesbar ist, wobei die Anzeigeeinrichtung (5, 6) eine Skala (5) und ein Anzeigefenster (6) umfasst, welche bei einer Bewegung des oberen Rückenlehnenteils (30) relativ zueinander beweglich sind, wobei eines der beiden Elemente (5, 6) gemeinsam mit den zu verstellenden Gurtpunkten (31, 32) bewegbar ist.

15. Kinderschutzsystem nach einem der vorangehenden Ansprüche, **dadurch gekennzeichnet, dass** die Position des mindestens einen Gurtpunkts (31, 32) einhändig verstellbar ist.

## Claims

1. Child protection system for a motor vehicle seat comprising:
- a seat shell (1),
- a backrest (2) of the seat shell extending along a backrest's longitudinal direction for the back support of the torso of a child, and
- a seat belt (4),
wherein the backrest comprises an upper backrest part (30) which is movably arranged on the seat shell (1) and at which at least one belt point (31, 32) is provided, at which the seat belt (4) is arranged, wherein a lower backrest part (33) of the backrest (2) which is arranged at the seat shell (1) to be pivotable about a pivot axis (33a), the lower backrest part comprising a coupling section (34) which is immovably arranged at the lower backrest part (33), said coupling section being provided and designed to interact with the upper backrest part (30) in such a way that a displacement of the upper backrest part (30) allows for the inclination of the lower backrest part (33) to be adjusted together with the position of the at least one belt point (31, 32),
**characterized in that**
the upper backrest part (30), for pivoting the lower backrest part (33), comes in direct operative connection to the coupling section (34) which is immovably arranged at the lower backrest part (33).

2. Child protection system according to claim 1, **characterized in that** the upper backrest part (30) is designed to support the head and the upper torso of a child (K) and the lower backrest part (33) is designed to support the pelvis region of a child (K).

3. Child protection system according to claim 1 or 2, **characterized in that** the upper backrest part (30) is movable along the backrest's longitudinal direction (L) along which the backrest (2) extends.

4. Child protection system according to any one of the claims 1 to 3, **characterized in that** the pivot axis (33a) extends transversely to the backrest's longitudinal direction (L).

5. Child protection system according to any one of the preceding claims, **characterized in that** the coupling section (34) is arranged at the lower backrest part (33) in a stationary and torque-proof manner.

6. Child protection system according to any one of the preceding claims, **characterized in that** the pivoting movement (D) of the lower backrest part (33) is given by the shape of the coupling section (34) which is immovably arranged at the lower backrest part (30).

7. Child protection system according to claim 6, **characterized in that** the coupling section (34) is wedge-shaped and has a inclined plane which is inclined such that, upon a displacement of the upper backrest part (30), the upper backrest part (30) at least with a section (30') slides along the coupling section (34) in order to pivot the lower backrest part (33) about the pivot axis (33a).

8. Child protection system according to any one of the preceding claims, **characterized in that** at least two seat belt points (31, 32) are provided at the upper backrest part (30), the seat belt points being formed as deflection locations each for the deflection of a belt section of the seat belt (4).

9. Child protection system according to claim 8, **characterized in that** the belt points (31, 32) are formed by slots of the upper backrest part (30).

10. Child protection system according to any one of the preceding claims, **characterized in that** the belt sections (41, 42) of the at least one seat belt (4) being positioned at the belt points (31, 32) are shoulder belt sections.

11. Child protection system according to any one of the preceding claims, **characterized in that** the upper backrest part (30) is movably guided along the backrest's longitudinal direction (L) at a rail (25a).

12. Child protection system according to any one of the preceding claims, **characterized in that** the upper backrest part (30) may be locked in its respectively set position by means of a locking mechanism (26, 27; 36, 37).

13. Child protection system according to claim 12, **characterized in that** the locking mechanism (26, 27; 36, 37) comprises a latch mechanism and is elastically biased to the locked state.

14. Child protection system according to any one of the preceding claims, **characterized in that** a display device (5, 6) is provided by means of which the set position of the belt points (31, 32) is readable, wherein the display device (5, 6) comprises a scale (5) and a display window (6) which are movable relative to each other during a movement of the upper backrest part (30), one of the components (5, 6) being movable together with the belt point (31, 32) to be adjusted.

15. Child protection system according to any one of the preceding claims, **characterized in that** the position of the at least one belt point (31, 32) may be adjusted with one hand.

## Revendications

1. Système de protection pour enfants destinés à un siège de véhicule automobile, comprenant
- une coque de siège (1),
- un dossier (2) de la coque de siège, lequel s'étend le long d'une direction longitudinale de dossier, destiné au soutien postérieur du torse d'un enfant, et
- une ceinture de sécurité (4),
dans lequel le dossier comprend une partie de dossier supérieure (30), qui est agencée avec faculté de déplacement sur la coque de siège (1) et sur laquelle est prévu au moins un point de ceinture (31, 32), au niveau duquel la ceinture de sécurité (4) est agencée,
dans lequel est prévue une partie de dossier inférieure (33) du dossier (2), laquelle est agencée sur la coque de siège (1) avec faculté de pivotement autour d'un axe de pivotement (33a) et comprend un tronçon d'accouplement (34) agencé stationnaire sur la partie de dossier inférieure (33), ledit tronçon étant réalisé est prévu pour coopérer avec la partie de dossier supérieure (30) de telle manière qu'en déplaçant la partie de dossier supérieure (30) l'inclinaison de la partie de dossier inférieure (33) conjointement avec la position dudit au moins un point de ceinture (31, 32) et réglable,
**caractérisé en ce que** la partie de dossier supérieure (30) entre en liaison d'action directe avec le tronçon d'accouplement (34) agencé stationnaire sur la partie de dossier inférieure (33) pour faire pivoter la partie de dossier inférieure (33).

2. Système de protection pour enfants selon la revendication 1, **caractérisé en ce que** la partie de dossier supérieure (30) est réalisée pour soutenir la tête et le torse supérieur d'un enfant (K), et la partie de dossier inférieure (33) est réalisée pour soutenir la zone du bassin d'un enfant (K).

3. Système de protection pour enfants selon la revendication 1 ou 2, **caractérisé en ce que** la partie de dossier supérieure (30) est capable de se déplacer le long de la direction longitudinale (L) le long de laquelle s'étend le dossier (2).

4. Système de protection pour enfants selon l'une des revendications 1 à 3, **caractérisé en ce que** l'axe de pivotement (33a) s'étend perpendiculairement à la direction longitudinale (L) du dossier.

5. Système de protection pour enfants selon l'une des revendications précédentes, **caractérisé en ce que** le tronçon d'accouplement (34) est agencé stationnaire et solidaire en rotation sur la partie de dossier inférieure 33).

6. Système de protection pour enfants selon l'une des revendications précédentes, **caractérisé en ce que** le mouvement de pivotement (D) de la partie de dossier inférieure (33) est imposé par la conformation du tronçon d'accouplement (34) agencé stationnaire sur la partie de dossier inférieure (30).

7. Système de protection pour enfants selon la revendication 6, **caractérisé en ce que** le tronçon d'accouplement (34) est réalisé en forme de coin et présente un plan oblique, lequel est incliné de telle façon que lors d'un déplacement de la partie de dossier supérieure (30), la partie de dossier supérieure (30) coulisse au moins avec une portion (30') le long du tronçon d'accouplement (34) afin de faire pivoter la partie de dossier inférieure (33) autour de l'axe de pivotement (33a).

8. Système de protection pour enfants selon l'une des revendications précédentes, **caractérisé en ce qu'**au moins deux points de ceinture (31, 32), réalisés respectivement pour défléchir un tronçon de la ceinture de sécurité (4), sont prévus sur la partie de dossier supérieure (30).

9. Système de protection pour enfants selon la revendication 8, **caractérisé en ce que** les points de ceinture (31, 32) sont formés par des fentes de la partie de dossier supérieure (30).

10. Système de protection pour enfants selon l'une des revendications précédentes, **caractérisé en ce que** les tronçons de ceinture (41, 42), positionnés au niveau des points de ceinture (31, 32), de ladite au moins une ceinture de sécurité (4) sont des tronçons de ceinture d'épaule.

11. Système de protection pour enfants selon l'une des revendications précédentes, **caractérisé en ce que** la partie de dossier supérieure (30) est guidée en déplacement sur un rail (25a) le long de la direction longitudinale (L) du dossier.

12. Système de protection pour enfants selon l'une des revendications précédentes, **caractérisé en ce que** la partie de dossier supérieure (30) est susceptible d'être verrouillée dans sa position respectivement réglée au moyen d'un mécanisme de verrouillage (26, 27 ; 36, 37).

13. Système de protection pour enfants selon la revendication 12, **caractérisé en ce que** le mécanisme de verrouillage (26, 27 ; 36, 37) comprend un mécanisme à enclenchement et est précontraint de manière élastique vers la situation verrouillée.

14. Système de protection pour enfants selon l'une des revendications précédentes, **caractérisé en ce qu'**il est prévu un moyen d'affichage (5, 6) au moyen duquel la position établie des points de ceinture (31, 32) peut être lue, le moyen d'affichage (5, 7) comprenant une gradutation (5) et une fenêtre d'affichage (6), lesquelles sont déplaçables l'une par rapport à l'autre lors d'un mouvement de la partie de dossier supérieure (30), l'un des deux éléments (5, 6) étant déplaçables conjointement avec les points de ceinture (31, 32) à déplacer.

15. Système de protection pour enfants selon l'une des revendications précédentes, **caractérisé en ce que** la position dudit au moins un point de ceinture (31, 32) est réglable à l'aide d'une seule main.
